# EUROPEAN PATENT SPECIFICATION

(11) **EP 3 381 784 B1**
(45) Date of publication and mention of the grant of the patent: **27.11.2019**
(21) Application number: 18161156.7
(22) Date of filing: 12.03.2018
(51) Int. Cl.: B62K 21/08

(54) **STEERING DAMPER APPARATUS FOR SADDLE-RIDE TYPE VEHICLE**
LENKDÄMPFERVORRICHTUNG FÜR FAHRZEUG MIT SATTEL
APPAREIL D'AMORTISSEUR DE DIRECTION POUR VÉHICULE DE TYPE À SELLE

(30) Priority: 30.03.2017 JP 2017068856
(43) Date of publication of application: 03.10.2018
(73) Proprietor: HONDA MOTOR CO., LTD., Tokyo 107-8556 (JP)
(72) Inventor: GOGO, Kazuhiko, Wako-shi, Saitama 351-0193 (JP); ITABASHI, Takeyasu, Wako-shi, Saitama 351-0193 (JP)
(74) Representative: Weickmann & Weickmann PartmbB

(56) References cited:
- EP-A1- 1 375 328
- WO-A1-2007/134703
- JP-A- H05 201 377
- US-A1- 2003 047 904
- US-A1- 2009 250 893

## Description

### [TECHNICAL FIELD]

The present invention relates to a steering damper apparatus for saddle-ride type vehicle, comprising a pump unit disposed between a vehicle body frame and a steering element that configures part of a steering, the pump unit including: a pump case that has a cylinder hole having opposite ends thereof closed; a piston that is slidably fitted in the cylinder hole to thereby form an oil chamber between the piston and the pump case, the oil chamber being to be filled with damper oil; and a piston rod that is coaxially continuous to the piston and passes through one end portion of the pump case.

### [BACKGROUND ART]

Patent Document 1 discloses the preamble of claim 1, and an arrangement of a single pump unit disposed between a vehicle body frame and a front fork of a two-wheeled motor vehicle on one side in a vehicle width direction of the two-wheeled motor vehicle.

### [PRIOR ART DOCUMENT]

### [PATENT DOCUMENT]

[Patent Document 1] Japanese Application Patent Laid-open No. 1993-201377

### [SUMMARY OF THE INVENTION]

### [PROBLEM TO BE SOLVED BY THE INVENTION]

However, in the arrangement disclosed in Patent Document 1, because the pump unit is disposed on one side in the vehicle width direction, enhancing a damper function results in an increased length of a piston rod, inviting an increase in size of a steering damper apparatus.

The present invention has been made in view of the foregoing situation and it is an object of the present invention to provide a steering damper apparatus for a saddle-ride type vehicle that can achieve simplification and compactness.

### [MEANS FOR SOLVING THE PROBLEM]

To achieve the foregoing object, according to a first feature of the present invention, there is provided a steering damper apparatus for a saddle-ride type vehicle, comprising a pump unit disposed between a vehicle body frame and a steering element that configures part of a steering, the pump unit including: a pump case that has a cylinder hole having opposite ends thereof closed; a piston that is slidably fitted in the cylinder hole to thereby form an oil chamber between the piston and the pump case, the oil chamber being to be filled with damper oil; and a piston rod that is coaxially continuous to the piston and passes through one end portion of the pump case, characterized in that as said pump unit, a pair of pump units are respectively disposed on left and right sides of an imaginary plane that passes through a center of rotation of the steering so as to extend in a vehicle fore-aft direction, and a flexible pipe line connects between the pump units.

According to a second feature of the present invention, in addition to the first feature, the steering damper apparatus is configured such that a total of volume of the oil chambers of the pair of pump units is identical at an identical temperature.

According to a third feature of the present invention, in addition to the first or second feature, there is provided the steering damper apparatus for a saddle-ride type vehicle, further comprising a hydraulic adjustment mechanism disposed between the pair of pump units.

According to a fourth feature of the present invention, in addition to the third feature, the steering element is a front fork having a lower end portion thereof that journals a front wheel, and the hydraulic adjustment mechanism is attached on a bridge of the front fork.

According to a fifth feature of the present invention, in addition to the third feature, the hydraulic adjustment mechanism is attached on the vehicle body frame at a position behind a head pipe that steerably supports the steering.

According to a sixth feature of the present invention, in addition to any one of the third to fifth features, the hydraulic adjustment mechanism includes: a first orifice that constricts flow of oil from one to the other of the pair of pump units; a second orifice that constricts flow of oil from the other to the one of the pair of pump units; and a damping force adjusting valve that can vary a flow area of a bypass that bypasses the first orifice and the second orifice.

According to a seventh feature of the present invention, in addition to any one of the third to sixth features, the hydraulic adjustment mechanism includes an electric actuator for varying a degree of adjustment of the hydraulic adjustment mechanism.

According to an eighth feature of the present invention, in addition to any one of the first to seventh features, there is provided the steering damper apparatus for a saddle-ride type vehicle, further comprising an absorber attached to the pump case of at least either one of the pump units or the hydraulic adjustment mechanism, the absorber absorbing expansion and contraction of oil as caused by changes in temperature, the absorber including: a sub-tank; and an absorber piston or a bladder, the absorber piston being slidably fitted in the sub-tank so as to form, between the absorber piston and the sub-tank, an auxiliary oil chamber and an air chamber that communicate with the oil chamber, the bladder having a peripheral edge portion thereof clamped by the sub-tank.

According to a ninth feature of the present invention, in addition to the fourth feature, the pump units are disposed between a top bridge of the front fork and upper surfaces of main frames that extend rearward from the head pipe steerably supporting the steering.

According to a tenth feature of the present invention, in addition to the fourth feature, the pump units are disposed between a bottom bridge of the front fork and lower surfaces of main frames that extend rearward from the head pipe that steerably supports the steering.

According to an eleventh feature of the present invention, in addition to the first feature, an angle formed between a first straight line and a second straight line includes a steering angle of a right angle within a range over which the steering is turned, the first straight line connecting between a center of rotation of the steering and a first connection center as seen in a plan view, the pump unit being connected with the steering element at the first connection center, the second straight line connecting between a second connection center and the first connection center as seen in the plan view, the pump unit being connected with the vehicle body frame at the second connection center.

### [EFFECTS OF THE INVENTION]

With the first feature of the present invention, the disposition of the pair of left and right pump units on the left and right sides can promote simplification and compactness of the steering damper apparatus and the flexible pipe line can expand and contract to follow displacement of the left and right pump cases during turning of the steering.

With the second feature of the present invention, the total of the volume of the oil chambers of the pair of pump units is substantially identical at an identical temperature. Thus, a need for an absorber that absorbs expansion and contraction of oil caused by changes in temperature can be eliminated or the absorber can be simplified.

With the third feature of the present invention, the pump units are disposed separately from the hydraulic adjustment mechanism. Reduction in size of the pump units can thus be achieved.

With the fourth or fifth feature of the present invention, the hydraulic adjustment mechanism is disposed close to the pump units, so that the pipe line can be shortened.

With the sixth feature of the present invention, in the hydraulic adjustment mechanism, the first orifice and the second orifice are disposed separately from the damping force adjusting valve, so that the structure of the first orifice, the second orifice, and the damping force adjusting valve can be simplified.

With the seventh feature of the present invention, the degree of adjustment of the hydraulic adjustment mechanism is varied by the electric actuator, so that the damping force can be readily varied even while the saddle-ride type vehicle is traveling.

With the eighth feature of the present invention, changes in pressure inside the steering damper apparatus due to changes in temperature can be absorbed by the absorber that absorbs expansion and contraction of oil as caused by changes in temperature.

With the ninth feature of the present invention, an empty space available at a position above the main frames can be effectively used to dispose the pump units.

With the tenth feature of the present invention, an empty space available at a position below the main frames can be effectively used to dispose the pump units.

With the eleventh feature of the present invention, changes in a stroke amount of the pump unit with respect to a turning angle of the steering can be minimized, so that changes in an amount of oil delivered from the pump unit can be minimized.

### [BRIEF DESCRIPTION OF THE DRAWINGS]

[FIG. 1] FIG. 1 is a right side view of a two-wheeled motor vehicle according to a first embodiment of the present invention.
[FIG. 2] FIG. 2 is a view of a steering damper apparatus as viewed in a direction of arrow 2 in FIG. 1.
[FIG. 3] FIG. 3 is a sectional view schematically depicting a configuration of the steering damper apparatus.
[FIG. 4] FIG. 4 is a view of a steering damper apparatus according to a second embodiment, corresponding to FIG. 2.
[FIG. 5] FIG. 5 is a sectional view schematically depicting a configuration of a steering damper apparatus according to a third embodiment.
[FIG. 6] FIG. 6 is a view of a steering damper apparatus according to a fourth embodiment as viewed from the same direction as with FIG. 2.
[FIG. 7] FIG. 7 is a sectional view schematically depicting a configuration of the steering damper apparatus according to the fourth embodiment.

### [MODES FOR CARRYING OUT THE INVENTION]

Embodiments of the present invention will be described below with reference to the accompanying drawings. Throughout the descriptions given hereunder, up and down, right and left, and front and rear are directions when viewed from an occupant riding on a two-wheeled motor vehicle.

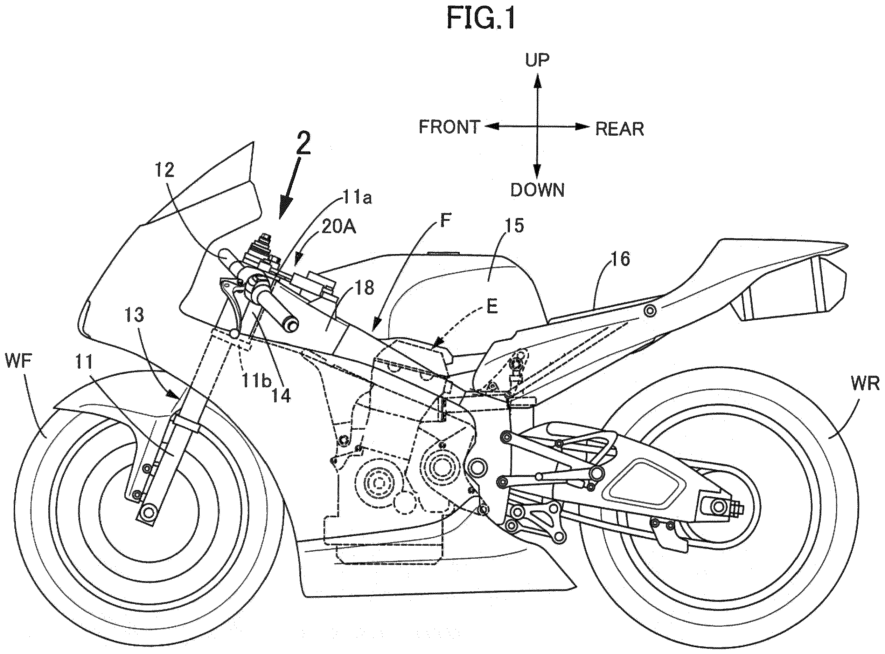

A first embodiment of the present invention will be described below with reference to FIGS. 1 to 3. In FIG. 1, a front fork 11 and a steering handlebar 12 are steerably supported on a head pipe 14 that is disposed at a front end portion of a vehicle body frame F of a two-wheeled motor vehicle as a saddle-ride type vehicle. The front fork 11 includes a top bridge 11a and a bottom bridge 11b and journals a front wheel WF. The steering handlebar 12 and the front fork 11 configure a steering 13. An internal combustion engine E that develops drive power for driving a rear wheel WR is mounted on the vehicle body frame F so as to be disposed between the front wheel WF and the rear wheel WR. The vehicle body frame F further supports a fuel tank 15 disposed above the internal combustion engine E and an occupant seat 16 disposed behind the fuel tank 15.

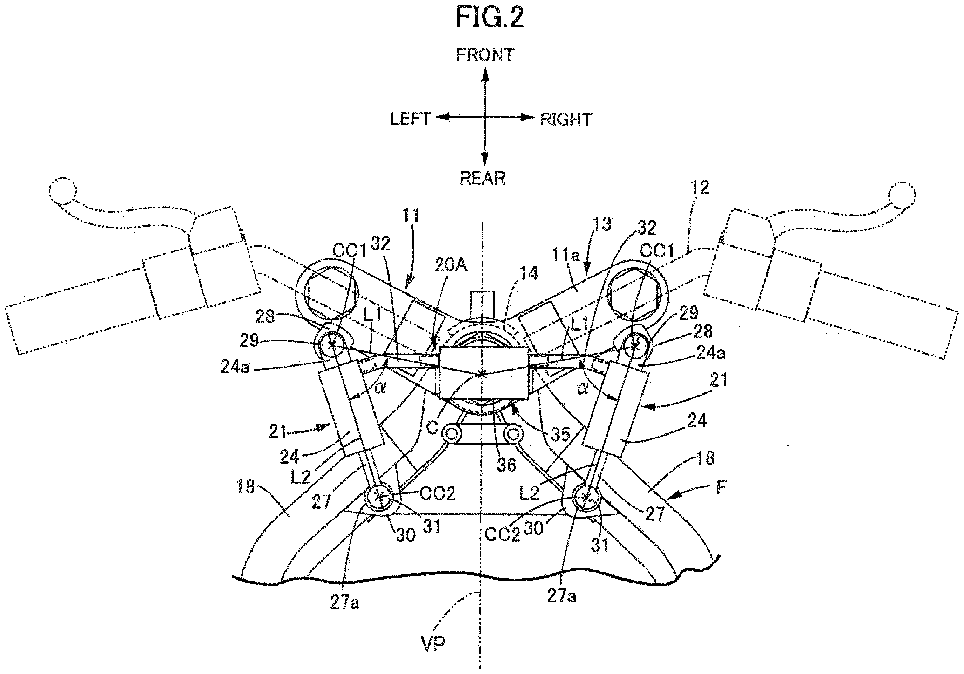

Reference is made to FIG. 2. A steering damper apparatus 20A is disposed between the vehicle body frame F and a steering element member that configures part of the steering 13. In the first embodiment, the steering element member is the front fork 11 and the steering damper apparatus 20A is disposed between the vehicle body frame F and the top bridge 11 a of the front fork 11.

The steering damper apparatus 20A includes a pair of pump units 21. The pump units 21 are disposed on left and right sides of an imaginary plane VP that passes through a center of rotation C of the steering 13, that is, an axis of the head pipe 14 so as to extend in a vehicle fore-aft direction.

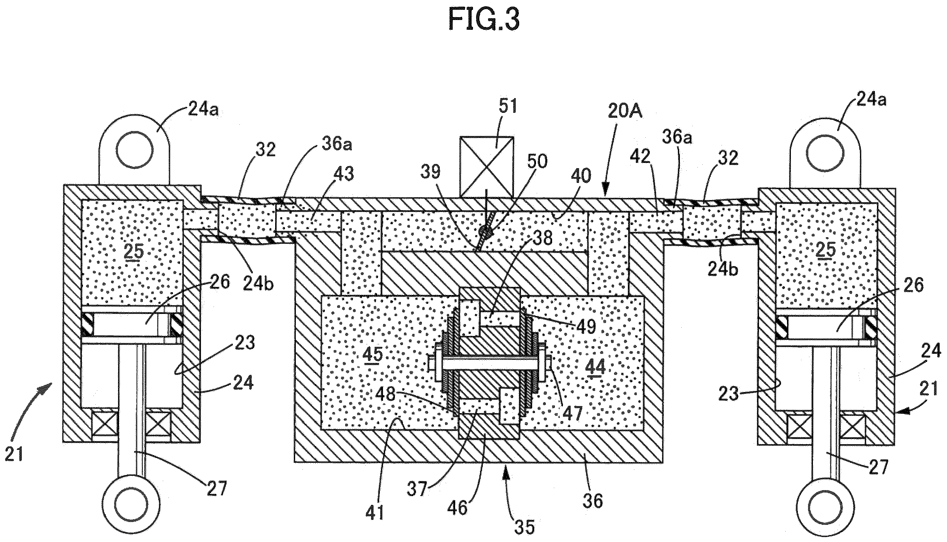

Reference is made to FIG. 3. The pump units 21 each include a pump case 24, a piston 26, and a piston rod 27. The pump case 24 has a cylinder hole 23 having opposite ends thereof closed. The piston 26 is slidably fitted in the cylinder hole 23 to thereby form an oil chamber 25 between the piston 26 and the pump case 24, the oil chamber 25 being to be filled with damper oil. The piston rod 27 is coaxially continuous to the piston 26 and passes through one end portion (rear end portion in the first embodiment) of the pump case 24.

A mounting protrusion 24a is protruded from the other end portion (front end portion in the first embodiment) of the pump case 24. The mounting protrusion 24a is rotatably mounted via a pin 29 on a bracket 28 disposed on the top bridge 11a. A bracket 30 is provided on an upper surface of each of a pair of left and right main frames 18 that configure part of the vehicle body frame F and extend downwardly toward the rear from the head pipe 14. An protruding end portion 27a of the piston rod 27 protruded from the pump case 24 is rotatably mounted via a pin 31 on the bracket 30. That is, the pump units 21 are disposed between the top bridge 11a of the front fork 11 and the upper surfaces of the main frames 18 of the vehicle body frame F.

A flexible pipe line, for example, a rubber hose 32 connects between the pair of left and right pump units 21. In the first embodiment, a connection pipe 24b is protruded from the pump case 24 and communicates with the oil chamber 25. The rubber hose 32 has one end portion connected with the connection pipe 24b.

A hydraulic adjustment mechanism 35 is disposed between the pair of pump units 21. The hydraulic adjustment mechanism 35 includes a case 36. The case 36 is mounted on the top bridge 11a. The case 36 includes a pair of connection pipes 36a protruded from left and right side walls of the case 36. The rubber hose 32 having the one end portion connected with the connection pipe 24b of each of the pump units 21 has the other end portion connected with the connection pipe 36a of the case 36 of the hydraulic adjustment mechanism 35.

The hydraulic adjustment mechanism 35 includes first and second orifices 37 and 38 and a damping force adjusting valve 39. The damping force adjusting valve 39 can vary a flow area of a bypass 40 that bypasses the first and second orifices 37 and 38.

In the case 36 of the hydraulic adjustment mechanism 35, an oil chamber hole 41, a first oil passage 42, and a second oil passage 43 are formed. The oil chamber hole 41 extends in the vehicle width direction and has opposite ends thereof closed. The first oil passage 42 communicates with the connection pipe 36a, out of the pair of connection pipes 36a of the case 36, which communicates with the oil chamber 25 of the right hand-side pump unit 21. The second oil passage 43 communicates with the connection pipe 36a, out of the pair of connection pipes 36a of the case 36, which communicates with the oil chamber 25 of the left hand-side pump unit 21. A bulkhead 46 is disposed at an intermediate portion in a longitudinal direction of the oil chamber hole 41. The bulkhead 46 divides the oil chamber hole 41 into a first oil chamber 44 and a second oil chamber 45. The first oil chamber 44 communicates with the first oil passage 42. The second oil chamber 45 communicates with the second oil passage 43. The bulkhead 46 has the first and second orifices 37 and 38 formed therein.

A support rod 47 passes through a central portion of the bulkhead 46. A first leaf valve 48 is mounted on a protruding portion of the support rod 47 protruded to the second oil chamber 45 side. The first leaf valve 48 allows oil to flow from the first oil chamber 44 to the first orifice 37, but prevents the oil from flowing from the second orifice 38 to the first oil chamber 44. A second leaf valve 49 is mounted on a protruding portion of the support rod 47 protruded to the first oil chamber 44 side. The second leaf valve 49 allows the oil to flow from the second oil chamber 45 to the second orifice 38, but prevents the oil from flowing from the first orifice 37 to the second oil chamber 45. That is, the first orifice 37 constricts flow of oil from the right hand-side pump unit 21 to the left hand-side pump unit 21. The second orifice 38 constricts flow of oil from the left hand-side pump unit 21 to the right hand-side pump unit 21.

The bypass 40 is formed in the case 36 so as to bypass the first and second orifices 37 and 38 and to connect between the first oil passage 42 and the second oil passage 43. The damping force adjusting valve 39 capable of varying the flow area of the bypass 40 is a butterfly valve including a valve stem 50 that is rotatably supported in the case 36.

The hydraulic adjustment mechanism 35 is provided with an electric actuator 51 for varying a degree of adjustment of the hydraulic adjustment mechanism 35. The electric actuator 51 is a stepping motor or a solenoid connected with the valve stem 50.

The steering damper apparatus 20A is configured such that a total of volume of the oil chambers 25 of the pair of pump units 21 is substantially identical at an identical temperature. This is why the pipe line 32 connecting between the pair of pump units 21 and the hydraulic adjustment mechanism 35 is formed of a flexible rubber hose so as to absorb expansion and contraction of oil caused by changes in temperature.

Reference is made to FIG. 2. An angle α formed between a first straight line L1 and a second straight line L2 is set to include a steering angle of a right angle within a range over which the steering 13 is turned, the first straight line L1 connecting between the center of rotation C of the steering 13 and a first connection center CC1, that is, an axis of the pin 29 as seen in a plan view, the pump unit 21 being connected with the top bridge 11a of the front fork 11 at the first connection center CC1, the second straight line L2 connecting between the first connection center CC1 and a second connection center CC2, that is, an axis of the pin 31 as seen in the plan view, the pump unit 21 being connected with the main frame 18 of the vehicle body frame F.

Operation of the first embodiment will be described below. The steering damper apparatus 20A in the first embodiment includes the pair of pump units 21 disposed between the vehicle body frame and the front fork 12 that configures part of the steering 13, each of the pump units 21 including the pump case 24 that has the cylinder hole 23 having opposite ends thereof closed, the piston 26 that is slidably fitted in the cylinder hole 23 to thereby form the oil chamber 25 between the piston 26 and the pump case 24, the oil chamber 25 being to be filled with damper oil, and the piston rod 27 that is coaxially continuous to the piston 26 and passes through the one end portion of the pump case 24. The pair of pump units 21 are disposed on left and right sides of the imaginary plane VP that passes through the center of rotation C of the steering 13 so as to extend in the vehicle fore-aft direction, the pump units 21 being connected with each other by the flexible pipe lines 32. Thus, disposing the pair of left and right pump units 21 on the left and right sides enables simplification and compactness of the steering damper apparatus 20A and the rubber hoses 32 as the flexible pipe lines can expand and contract to follow displacement of the pump cases 24 on the left and right sides during turning of the steering 13.

Additionally, the steering damper apparatus 20A is configured such that the total of the volume of the oil chambers 25 of the pair of pump units 21 is substantially identical at an identical temperature. This arrangement eliminates the need for, or simplifies, the absorber that absorbs expansion and contraction of oil caused by changes in temperature.

The hydraulic adjustment mechanism 35 disposed between the pair of pump units 21 achieves reduction in size of the pump units 21.

The configuration in which the hydraulic adjustment mechanism 35 is mounted on the top bridge 11a of the front fork 11 allows the hydraulic adjustment mechanism 35 to be disposed close to the pump units 21, so that the pipe lines 32 can be made shorter.

The hydraulic adjustment mechanism 35 includes the first orifice 37 that constricts flow of oil from one to the other of the pair of pump units 21, the second orifice 38 that constricts flow of oil from the other to the one of the pair of pump units 21, and the damping force adjusting valve 39 that can vary the flow area of the bypass 40 that bypasses the first orifice 37 and the second orifice 38. This arrangement results in the hydraulic adjustment mechanism 35 being configured to include the first orifice 37 and the second orifice 38 separately from the damping force adjusting valve 39, so that the structure of the first orifice 37, the second orifice 38, and the damping force adjusting valve 39 can be simplified.

Moreover, the hydraulic adjustment mechanism 35 includes the electric actuator 51 for varying the degree of adjustment of the hydraulic adjustment mechanism 35. Therefore, the degree of adjustment of the hydraulic adjustment mechanism 35 is varied by the electric actuator 51, so that the damping force can be readily varied even while the two-wheeled motor vehicle is traveling.

The pump units 21 are disposed between the top bridge 11a of the front fork 11 and the upper surfaces of the main frames 18 that extend rearward from the head pipe 14 steerably supporting the steering 13. The pump units 21 can thus be disposed through an effective use of an empty space available at a position above the main frames 18.

In addition, the angle α formed between the first straight line L1 and the second straight line L2 is set to include the steering angle of a right angle within the range over which the steering 13 is turned, the first straight line L1 connecting between the center of rotation C of the steering 13 and the first connection center CC1 as seen in a plan view, the pump unit 21 being connected with the top bridge 11a of the front fork 11 at the first connection center CC1, the second straight line L2 connecting between the first connection center CC1 and the second connection center CC2 as seen in the plan view, the pump unit 21 being connected with the main frame 18 of the vehicle body frame F at the second connection center CC2. This arrangement allows changes in a stroke amount of the pump unit 21 with respect to a turning angle of the steering 13 to be minimized, so that changes in an amount of oil delivered from the pump unit 21 can be minimized.

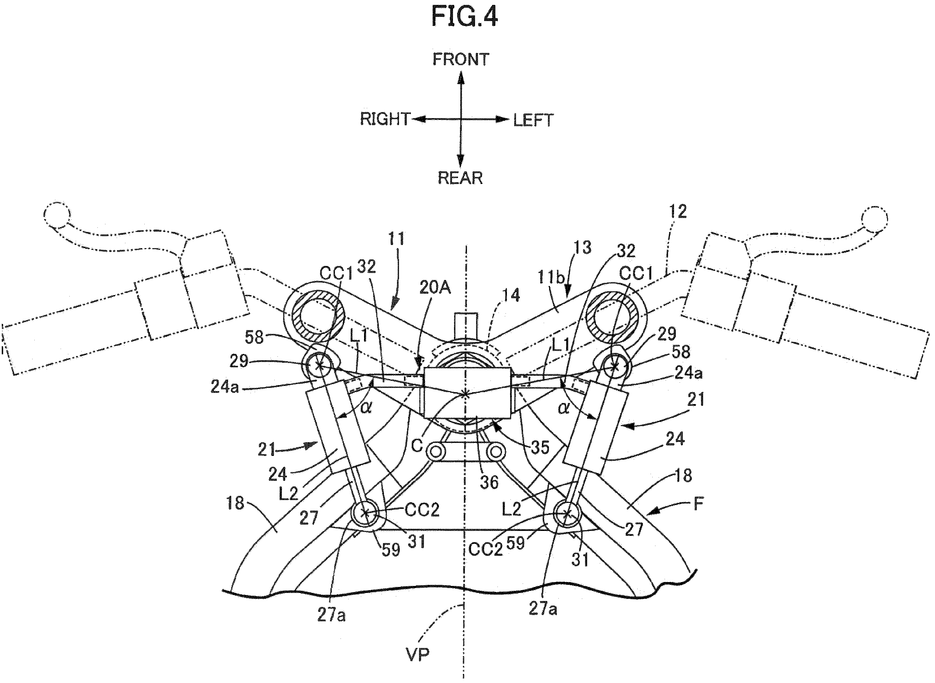

A second embodiment of the present invention will be described below with reference to FIG. 4. Parts corresponding to those of the first embodiment mentioned above are denoted by the same reference numerals and symbols, and detailed explanation thereof is omitted.

A steering damper apparatus 20A is disposed between main frames 18 of a vehicle body frame F and a bottom bridge 11b of a front fork 11 that configures part of a steering 13. The steering damper apparatus 20A includes a pair of pump units 21 and a hydraulic adjustment mechanism 35 disposed between the pump units 21. The pair of pump units 21 are disposed on left and right sides of an imaginary plane VP that passes through a center of rotation C of the steering 13, that is, an axis of a head pipe 14 so as to extend in the vehicle fore-aft direction.

A mounting protrusion 24a of a pump case 24 of the pump unit 21 is rotatably connected via a pin 29 with a bracket 58 disposed on the bottom bridge 11b, and a protruding end portion 27a of a piston rod 27 protruded from the pump case 24 is rotatably mounted via a pin 31 on a bracket 59 attached to a lower surface of the main frame 18. That is, the pump units 21 are disposed between the bottom bridge 11b of the front fork 11 and the lower surfaces of the main frames 18 of the vehicle body frame F.

The second embodiment can also achieve effects similar to effects achieved by the first embodiment described previously. In particular, the empty space available at a position below the main frames 18 can be effectively used to dispose the pump units 21.

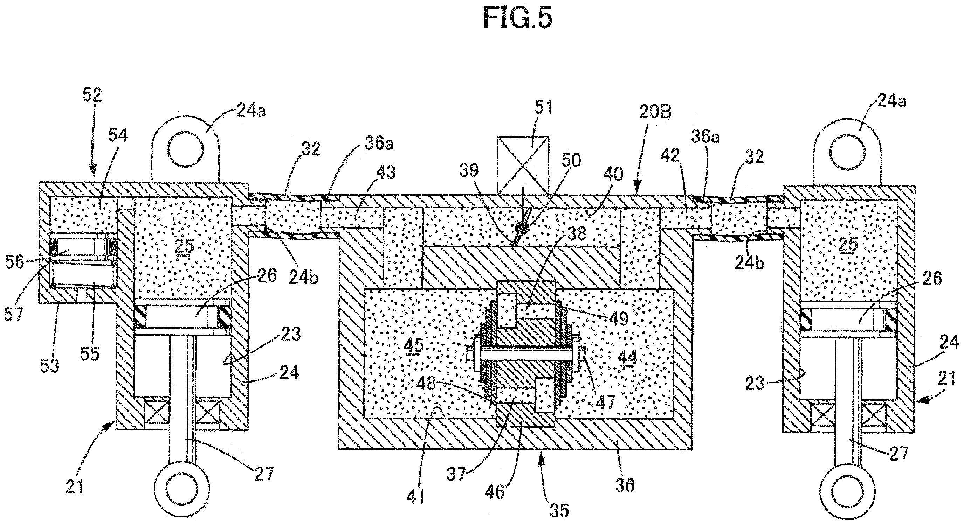

A third embodiment of the present invention will be described below with reference to FIG. 5. Parts corresponding to those of the first and second embodiments mentioned above are denoted by the same reference numerals and symbols, and detailed explanation thereof is omitted.

A steering damper apparatus 20B includes a pair of pump units 21, a hydraulic adjustment mechanism 35 disposed between the pump units 21, and an absorber 52 attached to a pump case 24 of at least either one of the pair of pump units 21 or to the hydraulic adjustment mechanism 35. The absorber 52 absorbs expansion and contraction of oil as caused by changes in temperature. In the third embodiment, the absorber 52 is attached to the pump case 24 of the pump unit 21 on the left hand side.

The absorber 52 includes a sub-tank 53, an absorber piston 56, and a spring 57. The sub-tank 53 is connected with the pump case 24. The absorber piston 56 is slidably fitted in the sub-tank 53 so as to form, between the absorber piston 56 and the sub-tank 53, an auxiliary oil chamber 54, which communicates with an oil chamber 25, and an air chamber 55, which communicates with atmosphere. The spring 57 is disposed between the absorber piston 56 and the sub-tank 53 and housed in the air chamber 55.

In the third embodiment, changes in pressure inside the steering damper apparatus 20B due to changes in temperature can be absorbed by the absorber 52, which absorbs expansion and contraction of oil caused by changes in temperature.

As another modification of the present invention, the air chamber 55 of the absorber 52 may be formed as a closed space not communicating with atmosphere.

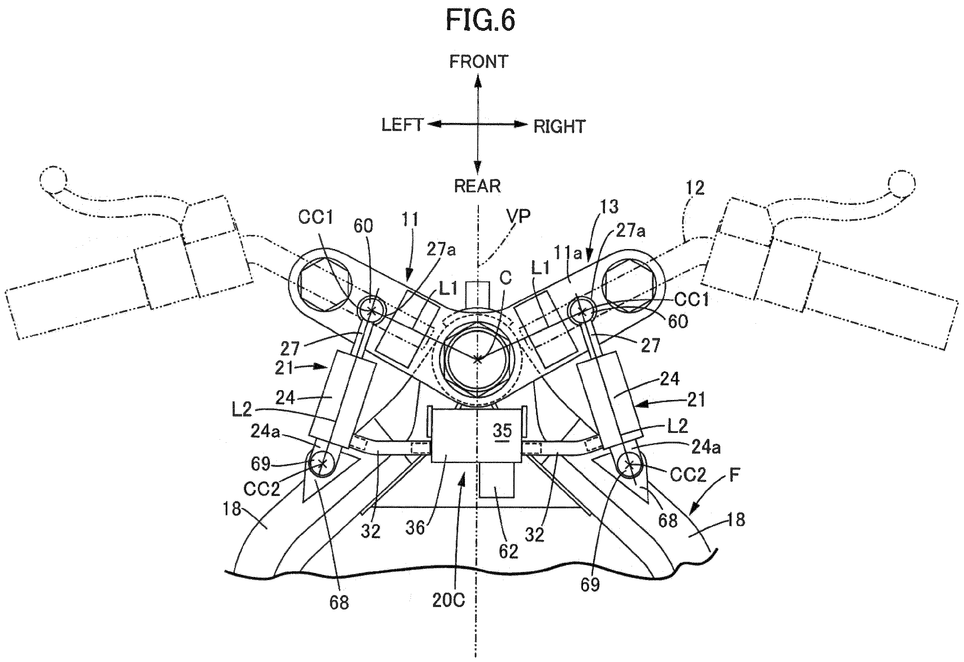

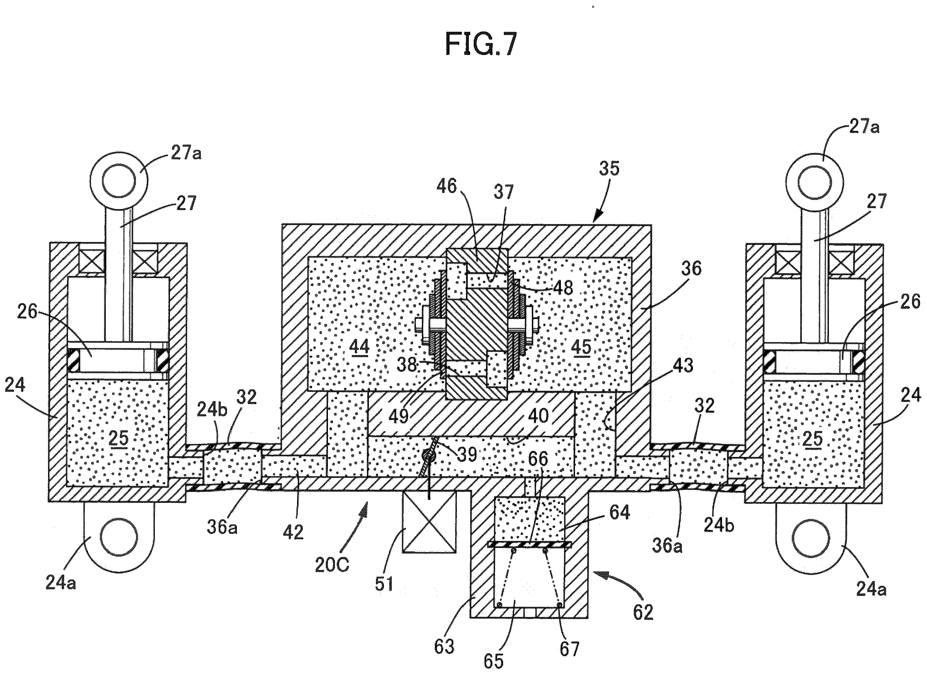

A fourth embodiment of the present invention will be described below with reference to FIGS. 6 and 7. Parts corresponding to those of the first to third embodiments mentioned above are denoted by the same reference numerals and symbols, and detailed explanation thereof is omitted.

A steering damper apparatus 20C is disposed between a vehicle body frame F and a top bridge 11a of a front fork 11 as a steering element member that configures part of a steering 13.

The steering damper apparatus 20C includes a pair of pump units 21. The pump units 21 are disposed on left and right sides of an imaginary plane VP that passes through a center of rotation C of the steering 13, that is, an axis of a head pipe 14 so as to extend in the vehicle fore-aft direction. A mounting protrusion 24a is protruded from a pump case 24 of the pump unit 21. The mounting protrusion 24a is rotatably mounted via a pin 69 on a bracket 68 that is disposed on a main frame 18 of the vehicle body frame F. An protruding end portion 27a of a piston rod 27 protruded from the pump case 24 is rotatably mounted via a pin 60 on the top bridge 11 a of the front fork 11.

A hydraulic adjustment mechanism 35 of the steering damper apparatus 20C is attached on the vehicle body frame F at a position behind the head pipe 14. In the fourth embodiment, the hydraulic adjustment mechanism 35 is disposed between front portions of a pair of left and right main frames 18 of the vehicle body frame F. Out of a pair of connection pipes 36a of a case 36 of the hydraulic adjustment mechanism 35, the connection pipe 36a that communicates with a first oil passage 42 is connected via a rubber hose 32 with a connection pipe 24b that communicates with an oil chamber 25 of the left hand-side pump unit 21. Out of the pair of connection pipes 36a of the case 36, the connection pipe 36a that communicates with a second oil passage 43 is connected via the rubber hose 32 with the connection pipe 24b that communicates with the oil chamber 25 of the right hand-side pump unit 21.

The hydraulic adjustment mechanism 35 includes first and second orifices 37 and 38. The first orifice 37 constricts flow of oil from the left hand-side pump unit 21 to the right hand-side pump unit 21. The second orifice 38 constricts flow of oil from the right hand-side pump unit 21 to the left hand-side pump unit 21.

An absorber 62 is attached to the hydraulic adjustment mechanism 35. The absorber 62 absorbs expansion and contraction of oil as caused by changes in temperature.

The absorber 62 includes a sub-tank 63, a bladder 66, and a spring 67. The sub-tank 63 is connected with the case 36 of the hydraulic adjustment mechanism 35. The bladder 66 has a peripheral edge portion thereof supported by the sub-tank 63 so as to form, between the bladder 66 and the sub-tank 63, an auxiliary oil chamber 64, which communicates with the bypass 40 continuous to the oil chamber 25, and an air chamber 65, which communicates with atmosphere. The spring 67 is disposed between the bladder 66 and the sub-tank 63 and housed in the air chamber 65.

The fourth embodiment can achieve effects basically similar to the effects achieved by the first embodiment described previously. In particular, because the hydraulic adjustment mechanism 35 is mounted on the vehicle body frame F at a position behind the head pipe 14, which steerably supports the steering 13, the hydraulic adjustment mechanism 35 can be disposed close to the pump units 21 to thereby reduce the length of the pipe line 32.

The air chamber 65 of the absorber 62 in the fourth embodiment may be formed as a closed space not communicating with atmosphere.

Embodiments of the present invention are explained above, but the present invention is not limited to the embodiments and can be modified in various ways within the gist of the present invention.

For example, the embodiments described above describe the steering damper apparatuses 20A and 20B for two-wheeled motor vehicles, but the present invention is applicable widely to saddle-ride type vehicles including a three-wheeled motor vehicle.
[SUBJECT] To enable simplification and compactness in a steering damper apparatus for a saddle-ride type vehicle, including a pump unit disposed between a vehicle body frame and a steering element that configures part of a steering, the pump unit including: a pump case that has a cylinder hole having opposite ends thereof closed; a piston that is slidably fitted in the cylinder hole to thereby form an oil chamber between the piston and the pump case; and a piston rod that is coaxially continuous to the piston and passes through one end portion of the pump case.
[MEANS FOR SOLUTION] A pair of pump units 21 are disposed on left and right sides of an imaginary plane VP that passes through a center of rotation C of a steering 13 so as to extend in a vehicle fore-aft direction. A flexible pipe line 32 connects between the pump units 21.

### [DESCRIPTION OF REFERENCE NUMERALS AND SYMBOLS]

11: Front fork as a steering element
11a: Top bridge
11b: Bottom bridge
13: Steering
14: Head pipe
18: Main frame
20A, 20B, 20C: Steering damper apparatus
21: Pump unit
23: Cylinder hole
24: Pump case
25: Oil chamber
26: Piston
27: Piston rod
32: Rubber hose as pipe line
35: Hydraulic adjustment mechanism
37: First orifice
38: Second orifice
39: Damping force adjusting valve
40: Bypass
51: Electric actuator
52, 62: Absorber
53, 63: Sub-tank
54, 64: Auxiliary oil chamber
55, 65: Air chamber
56: Absorber piston
66: Bladder
C: Center of rotation of steering
CC1: First connection center at which pump unit is connected with steering element
CC2: Second connection center at which pump unit is connected with vehicle body frame
L1: First straight line
L2: Second straight line
F: Vehicle body frame
VP: Imaginary plane
WF: Front wheel
α: Angle

## Claims

1. A steering damper apparatus for a saddle-ride type vehicle, comprising a pump unit (21) disposed between a vehicle body frame (F) and a steering element (11) that configures part of a steering (13), the pump unit (21) including: a pump case (24) that has a cylinder hole (23) having opposite ends thereof closed; a piston (26) that is slidably fitted in the cylinder hole (23) to thereby form an oil chamber (25) between the piston (26) and the pump case (24), the oil chamber (25) being to be filled with damper oil; and a piston rod (27) that is coaxially continuous to the piston (26) and passes through one end portion of the pump case (24),
**characterized in that**
said pump unit (21), comprises a pair of pump units (21) that are respectively disposed on left and right sides of an imaginary plane (VP) that passes through a center of rotation (C) of the steering (13) so as to extend in a vehicle fore-aft direction, and
a flexible pipe line (32) connects between the pump units (21).

2. The steering damper apparatus for a saddle-ride type vehicle according to claim 1, wherein the steering damper apparatus is configured such that a total of volume of the oil chambers (25) of the pair of pump units (21) is identical at an identical temperature.

3. The steering damper apparatus for a saddle-ride type vehicle according to claim 1 or 2, further comprising:
a hydraulic adjustment mechanism (35) disposed between the pair of pump units (21).

4. The steering damper apparatus for a saddle-ride type vehicle according to claim 3, wherein
the steering element is a front fork (11) having a lower end portion thereof that journals a front wheel (WF), and
the hydraulic adjustment mechanism (35) is attached on a bridge (11a, 11b) of the front fork (11).

5. The steering damper apparatus for a saddle-ride type vehicle according to claim 3, wherein the hydraulic adjustment mechanism (35) is attached on the vehicle body frame (F) at a position behind a head pipe (14) that steerably supports the steering (13).

6. The steering damper apparatus for a saddle-ride type vehicle according to any one of claims 3 to 5, wherein the hydraulic adjustment mechanism (35) includes: a first orifice (37) that constricts flow of oil from one to the other of the pair of pump units (21); a second orifice (38) that constricts flow of oil from the other to the one of the pair of pump units (21); and a damping force adjusting valve (39) that can vary a flow area of a bypass (40) that bypasses the first orifice (37) and the second orifice (38).

7. The steering damper apparatus for a saddle-ride type vehicle according to any one of claims 3 to 6, wherein the hydraulic adjustment mechanism (35) includes an electric actuator (51) for varying a degree of adjustment of the hydraulic adjustment mechanism (35).

8. The steering damper apparatus for a saddle-ride type vehicle according to any one of claims 1 to 7, further comprising:
an absorber (52, 62) attached to the pump case (24) of at least either one of the pump units (21) or the hydraulic adjustment mechanism (35), the absorber (52, 62) absorbing expansion and contraction of oil as caused by changes in temperature, the absorber (52, 62) including: a sub-tank (53, 63); and an absorber piston (56) or a bladder (66), the absorber piston (56) being slidably fitted in the sub-tank (53) so as to form, between the absorber piston (56) and the sub-tank (53, 63), an auxiliary oil chamber (54, 64) and an air chamber (55, 56) that communicate with the oil chamber (25), the bladder (66) having a peripheral edge portion thereof clamped by the sub-tank (63).

9. The steering damper apparatus for a saddle-ride type vehicle according to claim 4, wherein the pump units (21) are disposed between a top bridge (11a) of the front fork (11) and upper surfaces of main frames (18) that extend rearward from the head pipe (14) steerably supporting the steering (13).

10. The steering damper apparatus for a saddle-ride type vehicle according to claim 4, wherein the pump units (21) are disposed between a bottom bridge (11b) of the front fork (11) and lower surfaces of main frames (18) that extend rearward from the head pipe (14) that steerably supports the steering (13).

11. The steering damper apparatus for a saddle-ride type vehicle according to claim 1, wherein an angle (α) formed between a first straight line (L1) and a second straight line (L2) includes a steering angle of a right angle within a range over which the steering (13) is turned, the first straight line (L1) connecting between a center of rotation (C) of the steering (13) and a first connection center (CC1) as seen in a plan view, the pump unit (21) being connected with the steering element (11) at the first connection center (CC1), the second straight line (L2) connecting between a second connection center (CC2) and the first connection center (CC1) as seen in the plan view, the pump unit (21) being connected with the vehicle body frame (F) at the second connection center (CC2).

## Patentansprüche

1. Lenkungsdämpfer-Vorrichtung für ein Fahrzeug vom Sattelfahrtyp, umfassend eine Pumpeneinheit (21), welche zwischen einem Fahrzeugkörper-Rahmen (F) und einem Lenkelement (11) angeordnet ist, welches einen Teil einer Lenkung (13) konfiguriert, wobei die Pumpeneinheit (21) umfasst: ein Pumpengehäuse (24), welches ein Zylinderloch (23) aufweist, welches gegenüberliegende Enden davon geschlossen aufweist; einen Kolben (26), welcher gleitbar in das Zylinderloch (23) eingepasst ist, um dadurch eine Ölkammer (25) zwischen dem Kolben (26) und dem Pumpengehäuse (24) zu bilden, wobei die Ölkammer (25) mit Dämpferöl zu füllen ist; und eine Kolbenstange (27), welche koaxial fortlaufend zu dem Kolben (26) ist und durch einen Endabschnitt des Pumpengehäuses (24) hindurchtritt,
**dadurch gekennzeichnet, dass**
die Pumpeneinheit (21) ein Paar von Pumpeneinheiten (21) umfasst, welche jeweils an linken und rechten Seiten einer imaginären Ebene (VP) angeordnet sind, welche durch ein Rotationszentrum (C) der Lenkung (13) hindurchtritt, um sich so in einer Front-Heck-Richtung des Fahrzeugs zu erstrecken, und
eine flexible Rohrleitung (32) zwischen den Pumpeneinheiten (21) verbindet.

2. Lenkungsdämpfer-Vorrichtung für ein Fahrzeug vom Sattelfahrtyp nach Anspruch 1, wobei die Lenkungsdämpfer-Vorrichtung derart eingerichtet ist, dass ein Gesamtvolumen der Ölkammern (25) des Paars von Pumpeneinheiten (21) identisch bei einer identischen Temperatur ist.

3. Lenkungsdämpfer-Vorrichtung für ein Fahrzeug vom Sattelfahrtyp nach Anspruch 1 oder 2, ferner umfassend:
einen hydraulischen Anpassungsmechanismus (35), welcher zwischen dem Paar von Pumpeneinheiten (21) angeordnet ist.

4. Lenkungsdämpfer-Vorrichtung für ein Fahrzeug vom Sattelfahrtyp nach Anspruch 3, wobei das Lenkelement eine vordere Gabel (11) ist, welche einen unteren Endabschnitt davon aufweist, welcher ein Vorderrad (WF) lagert, und der hydraulische Anpassungsmechanismus (35) an einer Brücke (11a, 11b) der vorderen Gabel (11) angebracht ist.

5. Lenkungsdämpfer-Vorrichtung für ein Fahrzeug vom Sattelfahrtyp nach Anspruch 3, wobei der hydraulische Anpassungsmechanismus (35) an dem Fahrzeugkörper-Rahmen (F) an einer Position hinter einem Kopfrohr (14) angebracht ist, welches lenkbar die Lenkung (13) trägt.

6. Lenkungsdämpfer-Vorrichtung für ein Fahrzeug vom Sattelfahrtyp nach einem der Ansprüche 3 bis 5, wobei der hydraulische Anpassungsmechanismus (35) umfasst: eine erste Öffnung (37), welche ein Strömen von Öl von einer zu der anderen des Paars von Pumpeneinheiten (21) beschränkt; eine zweite Öffnung (38), welche ein Strömen von Öl von der anderen zu der einen des Paars von Pumpeneinheiten (21) beschränkt; und ein Dämpfungskraft-Anpassungsventil (39), welches eine Strömungsfläche einer Überbrückung (40) variieren kann, welche die erste Öffnung (37) und die zweite Öffnung (38) überbrückt.

7. Lenkungsdämpfer-Vorrichtung für ein Fahrzeug vom Sattelfahrtyp nach einem der Ansprüche 3 bis 6, wobei der hydraulische Anpassungsmechanismus (35) einen elektrischen Aktuator (51) zum Variieren eines Grads einer Anpassung des hydraulischen Anpassungsmechanismus (35) umfasst.

8. Lenkungsdämpfer-Vorrichtung für ein Fahrzeug vom Sattelfahrtyp nach einem der Ansprüche 1 bis 7, ferner umfassend:
einen Absorber (52, 62), welcher an dem Pumpengehäuse (24) von wenigstens entweder einer der Pumpeneinheiten (21) oder des hydraulischen Anpassungsmechanismus (35) angebracht ist, wobei der Absorber (52, 62) eine Expansion und Kontraktion von Öl absorbiert, wie sie von Änderungen in der Temperatur hervorgerufen werden, wobei der Absorber (52, 62) umfasst: einen Unter-Tank (53, 63); und einen Absorberkolben (56) oder eine Blase (66), wobei der Absorberkolben (56) gleitbar in den Unter-Tank (53) eingepasst ist, um zwischen dem Absorberkolben (56) und dem Unter-Tank (53, 64) eine Hilfs-Ölkammer (54, 64) und eine Luftkammer (55, 56) zu bilden, welche mit der Ölkammer (25) kommunizieren, wobei die Blase (66) einen Umfangsrand-Abschnitt davon von dem Unter-Tank (63) eingeklemmt aufweist.

9. Lenkungsdämpfer-Vorrichtung für ein Fahrzeug vom Sattelfahrtyp nach Anspruch 4, wobei die Pumpeneinheiten (21) zwischen einer oberen Brücke (11a) der vorderen Gabel (11) und oberen Flächen der Hauptrahmen (18) angeordnet sind, welche sich von dem Kopfrohr (14) nach hinten erstrecken, welches lenkbar die Lenkung (13) trägt.

10. Lenkungsdämpfer-Vorrichtung für ein Fahrzeug vom Sattelfahrtyp nach Anspruch 4, wobei die Pumpeneinheiten (21) zwischen einer unteren Brücke (11b) der vorderen Gabel (11) und unteren Flächen der Hauptrahmen (18) angeordnet sind, welche sich nach hinten von dem Kopfrohr (14) erstrecken, welches lenkbar die Lenkung (13) trägt.

11. Lenkungsdämpfer-Vorrichtung für ein Fahrzeug vom Sattelfahrtyp nach Anspruch 1, wobei ein Winkel (α), welcher zwischen einer ersten geraden Linie (L1) und einer zweiten geraden Linie (L2) gebildet ist, einen Lenkwinkel eines rechten Winkels innerhalb eines Bereichs umfasst, über welchen die Lenkung (13) gedreht wird, wobei die erste gerade Linie (L1) zwischen einem Rotationszentrum (C) der Lenkung und einem ersten Verbindungszentrum (CC1) in einer Draufsicht betrachtet verbindet, wobei die Pumpeinheit (21) mit dem Lenkelement (11) an dem ersten Verbindungszentrum (CC1) verbunden ist, wobei die zweite gerade Linie (L2) zwischen einem zweiten Verbindungszentrum (CC2) und dem ersten Verbindungszentrum (CC1) in der Draufsicht betrachtet verbindet, wobei die Pumpeneinheit (21) mit dem Fahrzeugkörper-Rahmen (F) an dem zweiten Verbindungszentrum (CC2) verbunden ist.

## Revendications

1. Appareil d'amortisseur de direction pour un véhicule de type à selle, comprenant une unité de pompe (21) disposée entre un cadre de véhicule (F) et un élément de direction (11) qui configure une partie d'une direction (13), l'unité de pompe (21) comprenant : un carter de pompe (24) qui a un trou de cylindre (23) ayant ses extrémités opposées fermées ; un piston (26) qui est monté de manière coulissante dans le trou de cylindre (23) afin de former ainsi une chambre d'huile (25) entre le piston (26) et le carter de pompe (24), la chambre d'huile (25) devant être remplie avec de l'huile d'amortisseur ; et une tige de piston (27) qui est continue de manière coaxiale par rapport au piston (26) et passe à travers une partie d'extrémité du carter de pompe (24),
**caractérisé en ce que** :
ladite unité de pompe (21) comprend une paire d'unités de pompe (21) qui sont respectivement disposées sur les côtés gauche et droit d'un plan imaginaire (VP) qui passe par un centre de rotation (C) de la direction (13) afin de s'étendre dans une direction avant - arrière de véhicule, et
une conduite de tuyau flexible (32) se raccorde entre les unités de pompe (21).

2. Appareil d'amortisseur de direction pour un véhicule de type à selle selon la revendication 1, dans lequel l'appareil d'amortisseur de direction est configuré de sorte qu'un total de volume des chambres d'huile (25) de la paire d'unités de pompe (21) est identique à une température identique.

3. Appareil d'amortisseur de direction pour un véhicule de type à selle selon la revendication 1 ou 2, comprenant en outre :
un mécanisme d'ajustement hydraulique (35) disposé entre la paire d'unités de pompe (21).

4. Appareil d'amortisseur de direction pour un véhicule de type à selle selon la revendication 3, dans lequel :
l'élément de direction est une fourche avant (11) ayant sa partie d'extrémité inférieure qui tourillonne une roue avant (WF), et
le mécanisme d'ajustement hydraulique (35) est fixé sur un pont (11a, 11b) de la fourche avant (11).

5. Appareil d'amortisseur de direction pour un véhicule de type à selle selon la revendication 3, dans lequel le mécanisme d'ajustement hydraulique (35) est fixée sur le cadre de véhicule (F) dans une position derrière une tubulure de refoulement (14) qui supporte de manière orientable la direction (13).

6. Appareil d'amortisseur de direction pour un véhicule de type à selle selon l'une quelconque des revendications 3 à 5, dans lequel le mécanisme d'ajustement hydraulique (35) comprend : un premier orifice (37) qui limite le flux d'huile de l'une à l'autre de la paire d'unités de pompe (21) ; un second orifice (38) qui limite le flux d'huile de l'autre à l'une de la paire d'unités de pompe (21) ; et une valve d'ajustement de force d'amortissement (39) qui modifie une zone d'écoulement d'une dérivation (40) qui contourne le premier orifice (37) et le second orifice (38).

7. Appareil d'amortisseur de direction pour un véhicule de type à selle selon l'une des revendications 3 à 6, dans lequel le mécanisme d'ajustement hydraulique (35) comprend un actionneur électrique (51) pour modifier un degré d'ajustement du mécanisme d'ajustement hydraulique (35).

8. Appareil d'amortisseur de direction pour un véhicule de type à selle selon l'une quelconque des revendications 1 à 7, comprenant en outre :
un absorbeur (52, 62) fixé sur le carter de pompe (24) d'au moins chacune des unités de pompe (21) ou du mécanisme d'ajustement hydraulique (35), l'absorbeur (52, 62) absorbant l'expansion et la contraction de l'huile telles que provoquées par des changements de température, l'absorbeur (52, 62) comprenant : un réservoir auxiliaire (53, 63); et un piston d'absorbeur (56) ou une vessie (66), le piston d'absorbeur (56) étant monté de manière coulissante dans le réservoir auxiliaire (53) afin de former entre le piston d'absorbeur (56) et le réservoir auxiliaire (53, 63), une chambre d'huile auxiliaire (54, 64) et une chambre à air (55, 56) qui communiquent avec la chambre d'huile (25), la vessie (66) ayant sa partie de bord périphérique serrée par le réservoir auxiliaire (63).

9. Appareil d'amortisseur de direction pour un véhicule de type à selle selon la revendication 4, dans lequel les unités de pompe (21) sont disposées entre le pont supérieur (11a) de la fourche avant (11) et les surfaces supérieures des cadres principaux (18) qui s'étendent vers l'arrière à partir de la tubulure de refoulement (14) supportant de manière orientable la direction (13).

10. Appareil d'amortisseur de direction pour un véhicule de type à selle selon la revendication 4, dans lequel les unités de pompe (21) sont disposées entre un pont inférieur (11b) de la fourche avant (11) et les surfaces inférieures des cadres principaux (18) qui s'étendent vers l'arrière à partir de la tubulure de refoulement (14) qui supporte de manière orientable la direction (13).

11. Appareil d'amortisseur de direction pour un véhicule de type à selle selon la revendication 1, dans lequel un angle (α) formé entre une première ligne droite (L1) et une seconde ligne droite (L2) comprend un angle de braquage d'un angle droit dans une plage sur laquelle la direction (13) est pivotée, la première ligne droite (L1) raccordant un centre de rotation (C) de la direction (13) et un premier centre de raccordement (CC1) comme observé sur une vue en plan, l'unité de pompe (21) étant raccordée avec l'élément de direction (11) au niveau du premier centre de raccordement (CC1), la seconde ligne droite (L2) se raccordant entre un second centre de raccordement (CC2) et le premier centre de raccordement (CC1) tel qu'observé sur la vue en plan, l'unité de pompe (21) étant raccordée avec le cadre de véhicule (F) au niveau du second centre de raccordement (CC2).
